# EUROPÄISCHE PATENTSCHRIFT

(11) **EP 1 137 510 B1**
(45) Veröffentlichungstag und Bekanntmachung des Hinweises auf die Patenterteilung: **16.04.2003**
(21) Anmeldenummer: 99966837.9
(22) Anmeldetag: 02.12.1999
(51) Int. Cl.: B23Q 37/00, B23Q 1/01, B23Q 1/66, B23Q 1/64

(54) **WERKZEUGMASCHINE MIT PIEZOELEKTRISCHER POSITIONSKORREKTUREINRICHTUNG**
MACHINE TOOL WITH A PIEZOELECTRIC POSITION ADJUSTING DEVICE
MACHINE-OUTIL EQUIPEE D'UNE DISPOSITIF PIEZO-ELECTRIQUE DE CORRECTION DE POSITION

(30) Priorität: 09.12.1998 DE 19856863
(43) Veröffentlichungstag der Anmeldung: 04.10.2001
(73) Patentinhaber: ALZMETALL WERKZEUGMASCHINENFABRIK UND GIESSEREI FRIEDRICH GMBH & CO., 83352 Altenmarkt/Alz. (DE)
(72) Erfinder: PROBST, Ludwig, D-83278 Traunstein (DE)
(74) Vertreter: Pfenning, Meinig & Partner GbR
(86) Internationale Anmeldenummer: DE9903908
(87) Internationale Veröffentlichungsnummer: WO00034007

(56) Entgegenhaltungen:
- EP-A- 0 568 798
- EP-A- 0 650 800
- EP-A- 0 820 835
- EP-A- 0 953 403
- WO-A-97/10071
- DE-A- 2 413 024
- GB-A- 998 471
- SU-A- 1 549 723
- US-A- 3 984 905
- US-A- 5 181 898

## Beschreibung

Die Erfindung betrifft eine stationäre Werkzeugmaschine zur spanenden Bearbeitung verschiedener Werkstücke, bei der mindestens eine Hauptspindel für einen rotierenden Antrieb mindestens eines Werkzeuges verwendet wird. Mit einer erfindungsgemäßen Werkzeugmaschine sollen in erster Linie metallische Werkstücke bearbeitet werden, wobei es sich hierbei um eine Bohr-, Fräs- oder auch Schleifmaschine handeln kann.

In jüngster Vergangenheit sind die Anforderungen für die zerspanende Bearbeitung, insbesondere metallischer Werkstücke sehr schnell gestiegen, so sollen die erforderlichen Fertigungszeiten verringert und die geforderte Präzision gleichzeitig erhöht werden. Demzufolge wurde versucht durch geeignete Maschinenkonzepte die Hochgeschwindigkeits-, Hart- und insbesondere die Trockenbearbeitung einzuführen. Dabei können besonders durch die letztgenannte Trockenbearbeitung die Fertigungskosten erheblich gesenkt werden, da auf die Beschaffung und die sehr aufwendige und teure Entsorgung der bisher üblicherweise verwendeten Kühlschmierstoffe verzichtet werden kann.

Dadurch ergeben sich verschiedene Probleme. Zum einen muß die Abfuhr der anfallenden Späne ohne die bisher verwendeten konventionellen flüssigen Kühl-Schmierstoffe und zum anderen die Abfuhr der Wärmeenergie gesichert werden.

Der letztgenannte Aspekt ist insbesondere unter dem Aspekt der gewünschten hohen Fertigungspräzision von Bedeutung, da die den Spänen innewohnende Wärmeenergie nicht mehr mit dem Kühl-Schmierstoff abgeführt wird, so daß die in den nicht abgeführten Spänen vorhandene Wärmeenergie auf Maschinenteile oder das Werkstück übertragen wird und demzufolge geometrische Verformungen durch unerwünschte lokale Wärmeausdehnung auftreten, die zu Fehlern der gewünschten Werkstückgeometrie führen können. Außerdem stören und beeinträchtigen die Späne gegebenenfalls die Funktion einer solchen Werkzeugmaschine, so daß sie in regelmäßigen Abständen manuell entfernt werden müssen.

Wegen der bisher nur unbefriedigend abgeführten Späne, muß auch an den Werkzeugmaschinen entsprechend Vorsorge getroffen werden, um durch diese hervorgerufene Beschädigungen, insbesondere in Lagerbereichen, zu vermeiden.

Die Späneablagerung, insbesondere auf horizontalen Flächen an einer Werkzeugmaschine, bereitet aber auch bei der Verwendung herkömmlicher Kühlschmierstoffe Probleme, so daß auch hier häufig manuell eingegriffen werden muß.

In EP 0 650 800 A2 ist eine Holzbearbeitungsmaschine beschrieben, bei der eine Arbeitsfläche auf mindestens einem prismatischen Körper angeordnet ist, der um eine zentrale Achse gedreht werden kann. Auf der Arbeitsfläche befestigte Holzpaneele können nach entsprechender Drehung des prismatischen Körpers und demzufolge Ausrichtung der Arbeitsfläche in Bezug zu mindestens einem Werkzeug, mit diesem bearbeitet werden. Dabei ist das mindestens eine Werkzeug in Bezug zur Arbeitsfläche in einem Winkel schräg nach unten geneigt. Aus W0 97/10071 A1 ist ein Bearbeitungszentrum bekannt. Bei diesem Bearbeitungszentrum wird ein Revolverkopf, an dem mehrere Spindeln für unterschiedliche Werkzeuge vorhanden sind, verwendet. Der Revolverkopf kann mit entsprechenden Werkzeugen in unterschiedlichen Richtungen und Positionen zum zu bearbeitenden Werkstück ausgerichtet werden.

In SU 15 49 723 A1 ist eine zerspanende Werkzeugmaschine beschrieben, bei der ein Werkstück an einer Traverse zwischen Stützen hin und her und auf und ab bewegt werden kann. Das Werkstück ist an einem prismatischen Körper mit einem Drehtisch gegenüber der Horizontalen schräg geneigt gehalten. Eine Spindel für Werkzeuge ist in einem Spindelkopf angeordnet, wobei die Spindel in mehreren Achsen bewegt oder verdreht werden kann. Mit dieser bekannten Werkzeugmaschine können fünf Flächen eines Werkstückes nach entsprechender Positionierung bearbeitet werden.

Aus GB 998,471 ist eine Werkstückaufnahmeeinrichtung bekannt, die ebenfalls um eine zentrale Achse verdreht und entsprechend des eingestellten Winkels vier Arbeitsflächen in Bezug zu einem oder mehreren Werkzeugen ausgerichtet werden können, wobei die Werkzeuge in unterschiedlichsten Winkeln zur jeweiligen Arbeitsfläche ausgerichtet sein können.

Es ist daher Aufgabe der Erfindung, eine Werkzeugmaschine für die spanende Bearbeitung von Werkstücken mit mindestens einer Hauptspindel, dahingehend zu verbessern, daß eine verbesserte Späneabfuhr mit geringem Aufwand erreicht werden kann.

Erfindungsgemäß wird diese Aufgabe mit den Merkmalen des Anspruchs 1 gelöst. Vorteilhafte Ausgestaltungsformen und Weiterbildungen der Erfindung ergeben sich mit den in den untergeordneten Ansprüchen genannten Merkmalen.

Die erfindungsgemäße Werkzeugmaschine zur spanenden Bearbeitung von Werkstücken zeichnet sich gegenüber den üblicherweise verwendeten Werkzeugmaschinen, durch die Ausrichtung der Hauptspindel in bezug zu den zu bearbeitenden Werkstücken aus, die im Gegensatz zu den bisher verwendeten vertikalen oder horizontalen Ausrichtungen, nunmehr eine Neigung in einem Winkel von mindestens 30° gegenüber der Horizontalen vorschlägt. Dabei ist der Antrieb der Hauptspindel unten und die Werkzeugaufnahme der Hauptspindel oben angeordnet, so daß das bzw. die zu bearbeitende Werkstück(e) oberhalb des oberen Endes der Hauptspindel angeordnet ist/sind. Besonders günstig ist ein Winkel von 45°, mit dem die Hauptspindel gegenüber der Horizontalen geneigt ausgerichtet wird.

Mit einer solchen Anordnung können die bei der zerspanenden Bearbeitung anfallenden Späne zum allergrößten Teil, ohne zusätzliche Maßnahmen, im freien Fall nach unten gelangen, wo sie in einen entsprechend angeordneten und dimensionierten Spänesammelcontainer hineinfallen und von dort mit einer geeigneten Späneabfuhreinrichtung, die beispielsweise ähnlich wie ein Transportband ausgebildet sein kann, entfernt werden. Mit dieser Ausbildung einer erfindungsgemäßen Werkzeugmaschine wird gesichert, daß der größte Teil der heißen Späne und demzufolge auch der größte Teil der anfallenden Wärmeenergie ohne Beeinträchtigung von Werkstück oder Maschinenteilen abführbar ist.

Vorteilhaft verfügt die erfindungsgemäße Werkzeugmaschine über einen Schwenktisch, der für die Bestückung bzw. die Entnahme fertig bearbeiteter Werkstücke in eine hierfür besonders geeignete Lage verschwenkt werden kann. So kann bei in einem Winkel von 45° geneigter Hauptspindel der Schwenktisch günstigerweise um einen Winkel von 135° verschwenkt werden, so daß eine auf dem Schwenktisch angeordnete Aufspannplatte dann horizontal ausgerichtet und vertikal von oben, also auch uneingeschränkt mittels eines Kranes bestückt werden kann. Nach der Bestückung kann der Schwenktisch um die besagten 135° verschwenkt werden, so daß der Aufspanntisch mit den zur Bearbeitung anstehenden Werkstücken orthogonal zur Hauptspindel-Längsachse ausgerichtet ist. Der Schwenktisch kann unter Verwendung eines entsprechend konzipierten Zahnkranz- oder Kettenschwenkantriebes, bevorzugt in Verbindung mit einem fluidischen Massenausgleich und einer Endlagendämfung versehen sein. Der Schwenktisch und der Schwenkantrieb können günstigerweise am Maschinengestell befestigt und drehbar gelagert sein, so daß ein geschlossener Kraftschluß erreicht und Biegungen sowie Verdrehungen des Maschinengestells infolge der bei der Zerspanung wirkenden Kräfte verhindert werden können. Der Schwenktisch sollte zumindest in den beiden Endlagen verriegelbar sein, und außerdem über ein Einzugs-Spannsystem mit einer Zentrierung verfügen.

Durch den fluidischen Massenausgleich können die für das Verschwenken des Schwenktisches erforderlichen Drehmomente verringert werden.

Vorteilhaft ist zumindest der Zerspanungsraum in einem bis auf eine Tür offenen Gehäuse eingeschlossen, um zum einen eine ausreichende Sicherheit für den Bediener und zum anderen eine Verringerung der Schallemission zu sichern. Da bei der erfindungsgemäßen Werkzeugmaschine auf die Verwendung von Kühl-Schmierstoffen verzichtet werden kann und den durch den in die Bearbeitungsposition verschwenkten Schwenktisch abgeschlossenen Zerspanungsraum, kann auf eine geschlossene dichte Tür verzichtet werden, so daß, die bevorzugt als Schiebetür ausgebildete Tür, lediglich zumindest teilweise gitterförmig ausgebildet werden kann. Die Anordnung der einzelnen Öffnungen einer solchen Tür kann regel- aber auch unregelmäßig erfolgen, so daß mit den einzelnen Öffnungen in entsprechender Anordnung Wort- und/oder Bildinformationen ausgedrückt werden können.

Um den Zerspanungsraum können außerdem vorteilhaft zusätzliche Prallbleche angeordnet werden, die in Verbindung mit Abdeckungen an den Führungsbahnen den unmittelbaren Wärmeübergang der heißen Späne auf das Maschinengestell verhindern, wobei die Prallbleche so angeordnet und ausgerichtet werden sollten, daß die anfallenden Späne an ihnen abgleiten und in den im unteren Teil der Werkzeugmaschine angeordneten Spänesammelcontainer fallen können. Mit diesen Prallblechen kann außerdem die Sicherheit erhöht werden, da der Zerspanungsraum nahezu vollständig abgeschlossen wird und auch bei Werkzeugbruch die entsprechend beschleunigten Bruchteile mit ihrer relativ hohen kinetischen Energie den Zerspanungsraum nicht verlassen können und demzufolge die Gefahr für den Bediener beseitigt ist.

In einer vorteilhaften Ausgestaltungsform können die Prallbleche und der Raum zwischen Zerspanungsraum und Gehäuseinnenwandung hinterlüftet werden, wobei hier günstigerweise entsprechend temperierte Luft verwendet wird. Da die einzelnen Prallbleche nicht lückenlos aneinandergereiht sind, kann ein bestimmter Teil der zugeführten Kühlluft durch die Spalte auch in den Zerspanungsraum gelangen. Dadurch kann bei entsprechend gezielter Luftführung verhindert werden, daß Stäube und Späne in bestimmte Bereiche innerhalb des Gehäuses der Werkzeugmaschine gelangen, wo sie gegebenenfalls zu Verschleiß oder Beeinträchtigung der Funktion in anderer Weise führen könnten. Außerdem besteht dadurch die Möglichkeit eine Temperierung der gesamten Werkzeugmaschine und hierbei insbesondere des Werkzeugmaschinengestells zu erreichen, so daß der Temperatureinfluß für die Bearbeitungsgeometriegenauigkeit nahezu ausgeschlossen werden kann.

Die in einer, beispielsweise aus Maschinengestell und Gehäuse gebildeten Einheit aufgenommene Hauptspindel, ist dort so gehalten und geführt, daß eine translatorische Bewegung der Hauptspindel und demzufolge auch des Werkzeuges in drei orthogonal zueinander ausgerichteten Achsen möglich ist. Für den Schutz der hierzu erforderlichen Führungen und der Antriebe vor Verschmutzung und insbesondere durch die Späne sind diese mit Teleskopprallblechen abgedeckt, die entsprechend der jeweiligen Position der Hauptspindel verschoben werden können und so eine optimale Abdekkung erreicht werden kann. Vorteilhaft sind diese Teleskopprallbleche ebenfalls hinterlüftet.

Die für den Schutz sowie für das Bestücken erforderliche Tür kann als Schutzschiebetür mit einer integrierten Schablone zur Sicherstellung der Einhaltung der Störkontur beim Tischaufbau ausgebildet sein, wobei die Schablone gleichzeitig zur Versteifung der gebogenen Türen dient. Dadurch kann ein falscher Aufbau der Werkstücke auf dem Schwenktisch verhindert werden, da sich die Tür bei Nichteinhaltung der Störkontur nicht schließen läßt.

Durch die geneigte Anordnung der Hauptspindel in bezug zu den zu bearbeitenden Werkstücken in einer 45° Überkopf-Anordnung können, wie bereits erwähnt, die anfallenden Späne nahezu ungehindert in den Spänecontainer fallen und es bestehen aber trotzdem nahezu keine Einschränkungen bezüglich der Leitungen für die Zuführung von Elektroenergie, Druckluft oder Hydraulikflüssigkeit, die für den Antrieb der einzelnen Komponenten der erfindungsgemäßen Werkzeugmaschine erforderlich sind. Dieser Sachverhalt trifft insbesondere für die Versorgung dieser Medien zum Schwenktisch zu, da keine durch den offenen Raum geführten flexiblen Leitungen erforderlich sind.

Auf dem Schwenktisch ist die bereits erwähnte Aufspannplatte für die verschiedenen Werkstücke angeordnet, wobei eine solche Aufspannplatte günstigerweise so ausgebildet ist, daß die darauf gespannten Werkstücke in zwei aber auch in vier Achsen manipulierbar sind. Dies bedeutet, daß durch entsprechende Führungen und Antriebselemente zwei lineare Freiheitsgrade für die Bewegung der Werkstücke berücksichtigt werden können und/oder die gesamte Aufspannplatte auch um zwei orthogonal zueinander ausgerichtete Schwenkachsen verschwenkbar ausgebildet sein kann. So können zwei Freiheitsgrade um diese beiden Schwenkachsen realisiert werden.

Die erfindungsgemäße Werkzeugmaschine kann mit einer Werkzeugwechseleinrichtung versehen werden, mit der die verschiedensten Bearbeitungsmöglichkeiten realisiert werden können. Ein solcher Werkzeugwechsler sollte günstigerweise nach dem Pick-Up-Prinzip ausgebildet sein, so daß die einzelnen Werkzeuge auf einfache Art und Weise in einen federvorgespannten, zangenförmig ausgebildeten Werkzeughalter eingeschoben bzw. herausgezogen werden können und im Werkzeughalter durch dessen Form und die Federkraft gehalten werden.

Vorteilhaft ist die Werkzeugwechseleinrichtung als Magazin ausgebildet, das außerhalb des Zerspanungsraumes, also auch außerhalb des Einflußbereiches der Späne angeordnet werden kann. Hierfür kann ein Teller- oder auch ein Kettenmagazin verwendet werden, wobei das jeweilige Werkzeug durch entsprechende Drehung positioniert werden kann. In einer erfindungsgemäßen Werkzeugmaschine kann bei einem Kettenmagazin ein Entnahmebereich von ca. 600 mm realisiert werden, wodurch sich eine Verkürzung der Zeit, die für einen Werkzeugwechsel erforderlich ist, ergibt.

Bei einem Kettenmagazin können günstigerweise im radialen Umlenkbereich Führungselemente vorgesehen werden, die bei den hohen Kettengeschwindigkeiten verhindern, daß die in den Werkzeughaltern aufgenommenen Werkzeuge infolge der relativ hohen Radialbeschleunigung herausfallen können.

Vorteilhaft ist es außerdem, zumindest in der Entlüftung einen oder mehrere Filter für die Separation von Stäuben, Aerosolen bzw. Rauch anzuordnen, die vorteilhaft regeneriert werden können.

Nachfolgend soll die Erfindung beispielhaft erläutert werden.

Dabei zeigen:

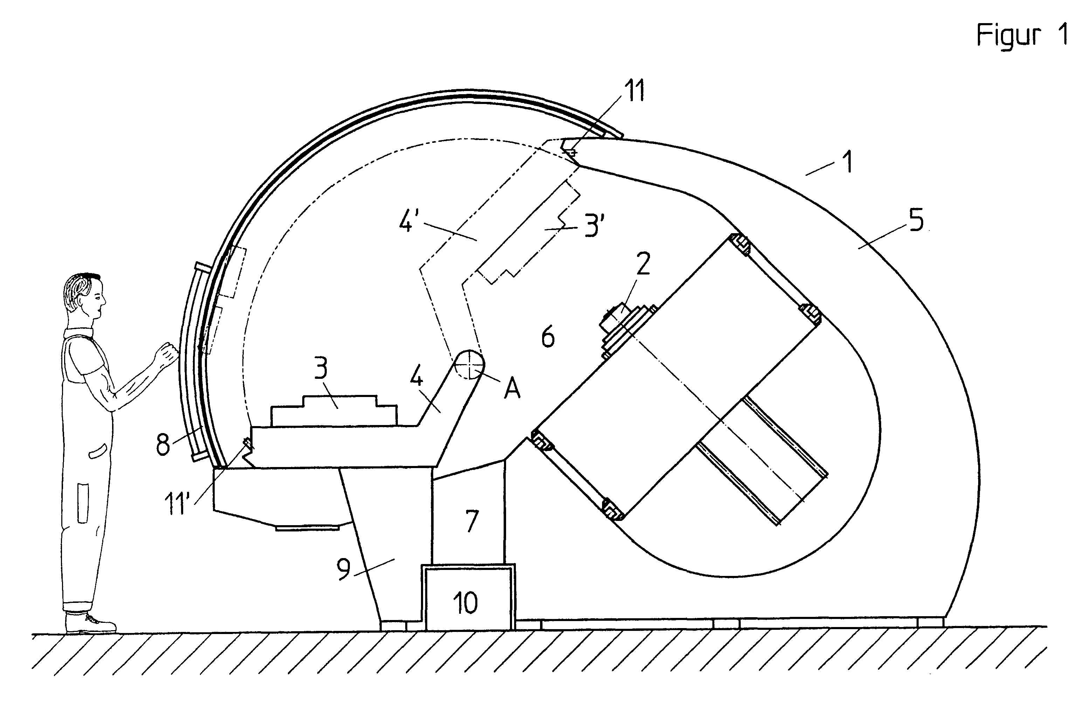

- Figur 1: eine schematische Seitenansicht eines Beispiels einer erfindungsgemäßen Werkzeugmaschine und
- Figur 2: eine Vorderansicht der Werkzeugmaschine.

Die Werkzeugmaschine 1 ist mit einem Gehäuse 5, das zumindest oberhalb des Maschinengestells 9 ausgebildet ist, nahezu vollständig umschlossen, so daß auch der Zerspanungsbereich 6 bei in Bearbeitungsstellung verschwenktem Schwenktisch 4' weitestgehend abgedeckt ist.

Innerhalb des Gehäuses 5 ist die hier in einem Winkel von 45° gegenüber der Horizontalen geneigte Hauptspindel 2 der Werkzeugmaschine 1 aufgenommen und gehalten.

Auf dem hier um 135° schwenkbaren Schwenktisch 4, wobei dessen beide Endlagen einmal mit den durchgezogenen Linien als Schwenktisch 4 und mit den Strich-Punkt-Linien in der Bearbeitungsstellung fixierten Schwenktischlage 4' dargestellt. Bei dem in der Bearbeitungsstellung gezeigten Schwenktisch 4' sind schematisch Werkstücke 3' dargestellt, die auf einer Aufspannplatte fixiert gehalten sind. Der Schwenktisch 4 kann mit einem Schwenkantrieb in seine beiden Endlagen um die Achse A verschwenkt werden, wobei an den beiden Endlagen am Gehäuse 5 ein Verriegelungs-Einzugs-Spannsystem mit Zentrierung 11 und 11' ausgebildet ist, so daß eine lagegenaue Positionierung und zusätzliche Fixierung in den Endlagen erreicht werden kann. Befindet sich der Schwenktisch 4' in der fixierten Endlage für die spanende Bearbeitung, wird ein geschlossener Kraftfluß über Maschinengestell 9, Gehäuse 5 und Schwenktisch 4' erreicht.

Unterhalb des Zerspanungsraumes 6 ist ein Spänesammelcontainer 7 angeordnet, in den die bei der Bearbeitung anfallenden Späne fallen können. Unter dem Spänesammelcontainer 7 ist eine Späneabführeinrichtung 10 angeordnet, mit der die in den Spänesammelcontainer 7 gelangten Späne abgeführt und einer Wiederverwertung zugeführt werden können. Ein solcher Spänesammelcontainer 7 kann schachtförmig ausgebildet sein, wobei mehrere vertikal und parallel ausgerichtete Bleche eine stabile Verbindung zwischen Maschinengestell 9 und Gehäuse 5 bilden, zwischen denen die Späne auf die Späneabfuhreinrichtung 10 fallen.

Im vorderen Teil der erfindungsgemäßen Werkzeugmaschine 1 ist eine Schiebetür 8 vorhanden, die ebenfalls aus einem Metall oder Kunststoff bestehen kann und in der z.B. mit einem Laser eine Lochstruktur ausgebildet ist.

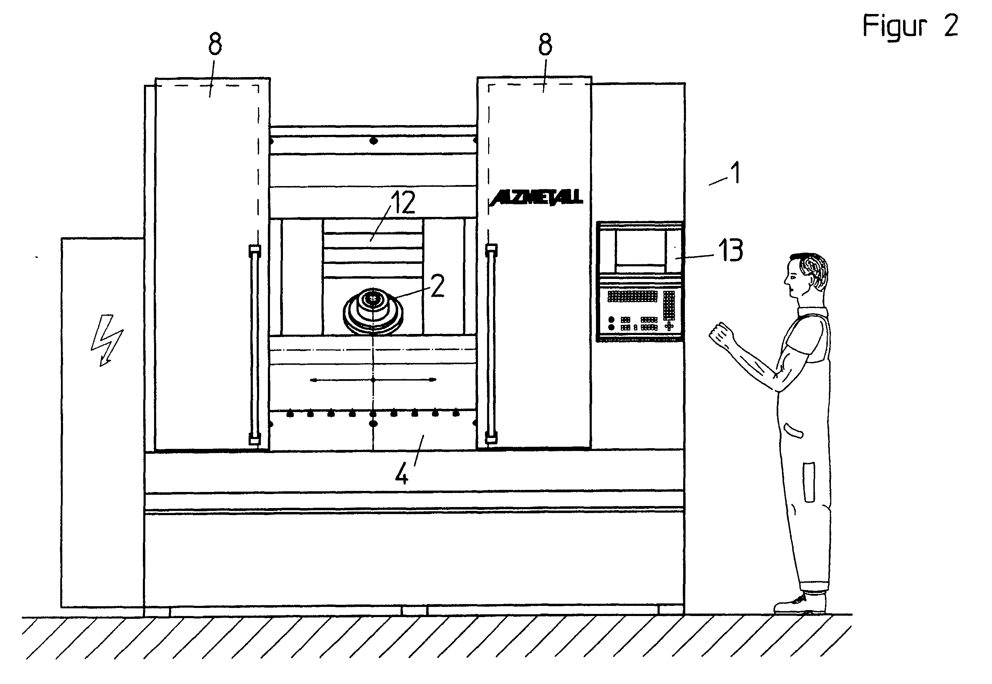

Mit der in Figur 2 gezeigten Vorderansicht einer erfindungsgemäßen Werkzeugmaschine 1 ist bei geöffneter Schiebetür 8 und abgesenkter Stellung des Schwenktisches 4 der Schutz der Führungen und der Antriebselemente für die Manipulation der Hauptspindel 2 mittels Teleskopprallblechen 12 erkennbar. Die Teleskopprallbleche 12 können je nach Stellung der Hauptspindel 2 entsprechend verschoben werden, so daß die hinter ihnen angeordneten Maschinenkomponenten weitestgehend vor den herabfallenden Spänen geschützt sind.

Wie dies mit dem Doppelpfeil, oberhalb des Schwenktisches 4, angedeutet ist, kann die Hauptspindel 2 unter anderem auch parallel zur Horizontalen translatorisch bewegt werden, so daß eine entsprechende Ausrichtung des Werkzeuges in bezug zu einem oder mehreren Werkstücken und eine Bewegung für den Austausch des Werkstückes möglich ist. Für letzteres kann die Hauptspindel translatorisch, hier nach rechts bewegt werden, da sich der hier nicht erkennbare Werkzeugwechsler hinter der rechten Hälfte der Tür 8 und der eingezeichneten Maschinensteuerung 13 befindet.

## Patentansprüche

1. Werkzeugmaschine zur spanenden Bearbeitung von Werkstücken, mit mindestens einer in einem Winkel von mindestens 30° gegenüber der Horizontalen geneigten, in Richtung auf Werkstücke (3) ausgerichteten Hauptspindel (2) und einem Schwenktisch (4, 4'), auf dem mindestens ein Werkstück (3) aufgespannt ist,
dabei die Hauptspindel (2) in einer Bearbeitungsstellung auf oberhalb eines Werkzeuges angeordnete Werkstücke (3) ausgerichtet, in dieser Bearbeitungsstellung die Tischfläche des Schwenktisches (4') orthogonal zur Hauptspindel-Achse ausgerichtet und
der Schwenktisch (4, 4') um eine seitlich am Schwenktisch (4, 4') angeordnete Achse (A) aus der Bearbeitungsstellung in eine Stellung zur Bestückung in horizontaler Lage verschwenkbar ist.

2. Werkzeugmaschine nach Anspruch 1,
**dadurch gekennzeichnet, daß** die Hauptspindel (2) in einem Winkel von 45° gegenüber der Horizontalen geneigt ausgerichtet ist.

3. Werkzeugmaschine nach Anspruch 1 oder 2,
**dadurch gekennzeichnet, daß** am Schwenktisch (4, 4') ein Zahnkranz- oder Kettenschwenkantrieb vorhanden ist.

4. Werkzeugmaschine nach einem der Ansprüche 1 bis 3, **dadurch gekennzeichnet, daß** am Schwenktisch (4, 4') ein fluidischer Massenausgleich mit Endlagendämpfung vorhanden ist.

5. Werkzeugmaschine nach einem der Ansprüche 1 bis 4, **dadurch gekennzeichnet, daß** Schwenktisch (4, 4') und Schwenkantrieb am Maschinengestell (9) befestigt sind.

6. Werkzeugmaschine nach einem der Ansprüche 1 bis 5, **dadurch gekennzeichnet, daß** der Zerspanungsraum (6) der Werkzeugmaschine (1) mit einem Gehäuse (5) und dem Schwenktisch (4') gekapselt ist.

7. Werkzeugmaschine nach einem der Ansprüche 1 bis 6, **dadurch gekennzeichnet, daß** am Gehäuse (5) eine zumindest teilweise gitterförmig ausgebildete Tür (8) vorhanden ist.

8. Werkzeugmaschine nach einem der Ansprüche 1 bis 7, **dadurch gekennzeichnet, daß** im Gehäuse (5) eine Be- und Entlüftung vorhanden ist.

9. Werkzeugmaschine nach einem der Ansprüche 1 bis 8, **dadurch gekennzeichnet, daß** unterhalb des bearbeiteten Werkstückes (3) ein Spänesammelcontainer (7) mit einer angeschlossenen Späneabfuhreinrichtung (10) angeordnet ist.

10. Werkzeugmaschine nach einem der Ansprüche 1 bis 9, **dadurch gekennzeichnet, daß** innerhalb des Gehäuses (5) um den Zerspanungsraum (6) in einem Abstand zur Gehäuseinnenwandung mehrere Prallbleche angeordnet sind.

11. Werkzeugmaschine nach einem der Ansprüche 8 bis 10, **dadurch gekennzeichnet, daß** in der Be- und/oder Entlüftung Filter vorhanden sind.

12. Werkzeugmaschine nach Anspruch 10 oder 11,
**dadurch gekennzeichnet, daß** die Prallbleche hinterlüftet sind.

13. Werkzeugmaschine nach einem der Ansprüche 1 bis 12, **dadurch gekennzeichnet, daß** am Schwenktisch (4, 4') eine um zwei orthogonal zueinander ausgerichtete Achsen verschwenkbare Aufspannplatte angeordnet ist.

14. Werkzeugmaschine nach einem der Ansprüche 1 bis 13, **dadurch gekennzeichnet, daß** die Hauptspindel (2) in drei orthogonal zueinander ausgerichteten Achsen translatorisch bewegbar ist.

15. Werkzeugmaschine nach einem der Ansprüche 1 bis 14, **dadurch gekennzeichnet, daß** die Führungen der Hauptspindel (2) mittels Teleskopprallblechen (12) abgedeckt sind.

16. Werkzeugmaschine nach einem der Ansprüche 1 bis 15, **dadurch gekennzeichnet, daß** die Teleskopprallbleche (12) hinterlüftet sind.

17. Werkzeugmaschine nach einem der Ansprüche 1 bis 16, **dadurch gekennzeichnet, daß** ein Werkzeug-Magazin außerhalb des Zerspanungsraumes (6), als Teller- oder Kettenmagazin angeordnet ist.

18. Werkzeugmaschine nach Anspruch 17,
**dadurch gekennzeichnet, daß** im Werkzeug-Magazin zangenförmig ausgebildete Werkzeughalter vorhanden sind.

19. Werkzeugmaschine nach Anspruch 17 oder 18,
**dadurch gekennzeichnet, daß** im radialen Umlenkbereich eines Kettenmagazins, der Radialbeschleunigung entgegenwirkende Führungselemente angeordnet sind.

## Claims

1. A machine tool for metal cutting of workpieces including at least one work spindle (2) inclined at an angle of at least 30° towards the horizontal line and aligned in the direction to workpieces (3), and a swing table (4, 4') on which at least one workpiece (3) is mounted,
wherein in a working position said work spindle (2) is aligned with said workpieces (3) arranged above a tool, in this working position the table surface of said swing table (4') is aligned mutually perpendicularly to the work spindle axis, and
said swing table (4, 4') is swinging horizontally about an axis (A) located laterally on said swing table (4, 4') from said working position into a position for hardfacing in the horizontal position.

2. A machine tool according to claim 1,
**characterized in that** said work spindle (2) is aligned inclined at an angle of 45° towards the horizontal line.

3. A machine tool according to claims 1 or 2,
**characterized in that** a toothed wheel rim or chain swivel drive is provided on said swing table (4, 4').

4. A machine tool according to any one of claims 1 to 3,
**characterized in that** a fluidic mass balance including end-of-travel damping is provided on said swing table (4, 4').

5. A machine tool according to any one of claims 1 to 4,
**characterized in that** said swing table (4, 4') and said swivel drive are mounted to the machine frame (9).

6. A machine tool according to any one of claims 1 to 5,
**characterized in that** the machining space (6) of said machine tool (1) is encapsulated with a housing (5) and said swing table (4').

7. A machine tool according to any one of claims 1 to 6,
**characterized in that** a door (8) formed at least partially in a crossbarred manner is provided on said housing (5).

8. A machine tool according to any one of claims 1 to 7,
**characterized in that** ventilation and venting are provided in said housing (5).

9. A machine tool according to any one of claims 1 to 8,
**characterized in that** a chip collector container (7) including an annexed chip discharging means (10) is arranged below said machined workpiece (3).

10. A machine tool according to any one of claims 1 to 9,
**characterized in that** inside said housing (5) a plurality of impact plates is arranged around said machining space (6) in a distance to the inner wall of said housing.

11. A machine tool according to any one of claims 8 to 10,
**characterized in that** filters are provided in said ventilation and/ or said venting.

12. A machine tool according to claim 10 or claim 11,
**characterized in that** said impact plates are ventilated at rear.

13. A machine tool according to any one of claims 1 to 12,
**characterized in that** a clamping plate swinging horizontally about two axes mutually perpendicularly aligned to each other is mounted on said swing table (4, 4').

14. A machine tool according to any one of claims 1 to 13,
**characterized in that** said work spindle (2) is movable in a translatory manner in three axes mutually perpendicularly aligned to each other.

15. A machine tool according to any one of claims 1 to 14,
**characterized in that** the guiding devices of said work spindle (2) are covered by means of telescopic impact plates (12).

16. A machine tool according to any one of claims 1 to 15,
**characterized in that** said telescopic impact plates (12) are ventilated at rear.

17. A machine tool according to any one of claims 1 to 16,
**characterized in that** a tool magazine is located as a disk or chain type magazine outside said machining space (6).

18. A machine tool according to claim 17,
**characterized in that** toolholders formed in a pincer-shaped manner are provided in said tool magazine.

19. A machine tool according to claim 17 or claim 18,
**characterized in that** guiding elements opposing to the radial acceleration are mounted in the radial deflecting area of a chain magazine.

## Revendications

1. Machine-outil destinée au traitement de pièces à usiner par enlèvement de copeaux, comportant au moins un arbre principal (2) ,incliné selon un angle au moins égal à 30° par rapport à l'horizontale, et orienté dans la direction de la pièce à usiner (3), et une table tournante (4, 4'), sur laquelle au moins une pièce à usiner (3) est fixée,
l'arbre principal (2) étant à cet égard orienté dans une position de traitement sur une pièce à usiner (3) disposée au-dessus d'un outil, la surface de table de la table tournante (4') étant dans cette position de traitement orientée perpendiculairement à l'axe de l'arbre principal, et
la table toumante (4, 4') pouvant pivoter autour d'un axe (A) disposé latéralement au niveau de la table foumante (4, 4') depuis une position de traitement vers une position permettant le montage dans une position horizontale.

2. Machine-outil selon la revendication 1, **caractérisée en ce que** l'arbre principal (2) est orienté de façon inclinée selon un angle de 45° par rapport à l'horizontale.

3. Machine-outil selon la revendication 1 ou 2, **caractérisée en ce qu'**existe au niveau de la table tournante (4, 4') un entraînement par pivotement à couronne dentée ou à chaîne.

4. Machine-outil selon l'une des revendications 1 à 3, **caractérisée en ce qu'**au niveau de la table toumante (4, 4') existe une masse d'équilibrage fluide présentant un amortissement de fin de course.

5. Machine-outil selon l'une des revendications 1 à 4, **caractérisée en ce que** la table tournante (4, 4') et l'entraînement par pivotement sont fixés sur le bâti de machine (9).

6. Machine-outil selon l'une des revendications 1 à 5, **caractérisée en ce que** l'espace d'enlèvement des copeaux (6) de la machine-outil (1) est encapsulé par un boîtier (5) et la table toumante (4').

7. Machine-outil selon l'une des revendications 1 à 6, **caractérisée en ce qu'**existe au niveau du boîtier (5) une porte (8) conçue au moins partiellement en forme de grille.

8. Machine-outil selon l'une des revendications 1 à 7, **caractérisée en ce qu'**existe dans le boîtier (5) une ventilation et une mise à l'atmosphère.

9. Machine-outil selon l'une des revendications 1 à 8, **caractérisée en ce que**, sous la pièce à usiner (3) traitée, est disposé un conteneur de récupération des copeaux (7) auquel est raccordé un dispositif d'évacuation des copeaux (10).

10. Machine-outil selon l'une des revendications 1 à 9, **caractérisée en ce qu'**à l'intérieur du boîtier (5) sont disposées plusieurs chicanes autour de l'espace d'enlèvement des copeaux (6), selon un écart par rapport à la paroi inteme du logement.

11. Machine-outil selon l'une des revendications 8 à 10, **caractérisée en ce qu'**existent des filtres dans la ventilation et/ou la mise à l'atmosphère.

12. Machine-outil selon la revendication 10 ou 11, **caractérisée en ce que** les chicanes sont ventilées par l'arrière.

13. Machine-outil selon l'une des revendications 1 à 12, **caractérisée en ce qu'**au niveau de la table toumante (4, 4') est disposé un plateau de fixation pouvant pivoter autour de deux axes orientés perpendiculairement l'un à l'autre.

14. Machine-outil selon l'une des revendications 1 à 13, **caractérisée en ce que** l'arbre principal (2) est mobile par translation selon trois axes orientés perpendiculairement les uns aux autres.

15. Machine-outil selon l'une des revendications 1 à 14, **caractérisée en ce que** les glissières de l'arbre principal (2) sont recouvertes au moyen de chicanes télescopiques (12).

16. Machine-outil selon l'une des revendications 1 à 15, **caractérisée en ce que** les chicanes télescopiques (12) sont ventilées par l'arrière.

17. Machine-outil selon l'une des revendications 1 à 16, **caractérisée en ce qu'**un magasin à outils est disposé en dehors de l'espace d'enlèvement des copeaux (6), en tant que magasin à plateau ou à chaîne.

18. Machine-outil selon la revendication 17, **caractérisée en ce qu'**existent dans le magasin à outils des porte-outils conçus en forme de pinces.

19. Machine-outil selon la revendication 17 ou 18, **caractérisée en ce que** dans la zone de renvoi radiale d'un magasin à chaîne sont disposés des éléments de guidage contrant l'accélération radiale.
